# EUROPEAN PATENT SPECIFICATION

(11) **EP 1 350 662 B1**
(45) Date of publication and mention of the grant of the patent: **20.07.2005**
(21) Application number: 02425189.4
(22) Date of filing: 27.03.2002
(51) Int. Cl.: B60K 37/00, B60H 1/00, B60H 1/34

(54) **Dashboard for vehicles**
Armaturenbrett für Fahrzeuge
Tableau de bord pour véhicules

(43) Date of publication of application: 08.10.2003
(73) Proprietor: DENSO THERMAL SYSTEMS S.p.A., 10046 Poirino (Torino) (IT)
(72) Inventor: Charbonnel, Daniel, 78570 Chanteloup les Vignes (FR)
(74) Representative: Marchitelli, Mauro

(56) References cited:
- DE-A- 19 623 579
- DE-C- 19 508 983
- US-A- 5 333 901

## Description

The present invention relates to a dashboard for vehicles according to the preamble of the main claim.

The dashboard of a vehicle is a complex unit, which comprises multiple devices and controls, such as, for example, the instrument panel, the assembly for air distribution inside the vehicle passenger compartment, the control panel for the air-distribution assembly, the airbag module, etc.

Dashboards for vehicles are already known which comprise an external shell that includes a wall permeable to air associated to an air distribution duct for distributing an air flow inside the vehicle passenger compartment in a diffused way and at a low rate. The air-permeable wall may consist of a mesh or grill or a perforated wall covered with a porous coating. In a dashboard with diffused distribution of the air flow through a porous wall, there is the need for distributing the air flow over a surface that is as wide as possible in order to make the distribution of the air in the passenger compartment as uniform as possible and to reduce the rate of the air flow delivered from the porous wall. A further requirement is that of providing the air-bag assembly on the passenger side with the corresponding cover or lid in the top part of the dashboard, without the overall dimensions of the air-bag assembly and corresponding lid interfering with the area in which it would be desirable to set the diffused-air distribution channel and the porous wall.

A dashboard with the features of the preamble of claim 1 is known from document DE-C-19508983.

The purpose of the present invention is to provide a dashboard for vehicles of the above-mentioned type which is simpler and less expensive than the known solutions and which will enable the aforesaid requirements to be met in the best possible way.

According to the present invention, the above purpose is achieved thanks to a dashboard having the characteristics forming the subject of the ensuing claims.

The present invention will now be described in detail, purely by way of non-limiting example, with reference to the attached drawings, in which:
- Figure 1 is a top plan view of a dashboard according to the present invention;
- Figure 2 is a cross-sectional view along the line II-II of Figure 1;
- Figure 3 is a cross-sectional view similar to that of Figure 2 schematically illustrating the phase of explosion of the air-bag on the passenger side; and
- Figures 4 and 5 are details at a larger scale of the parts indicated by the arrows IV and V in Figure 2.

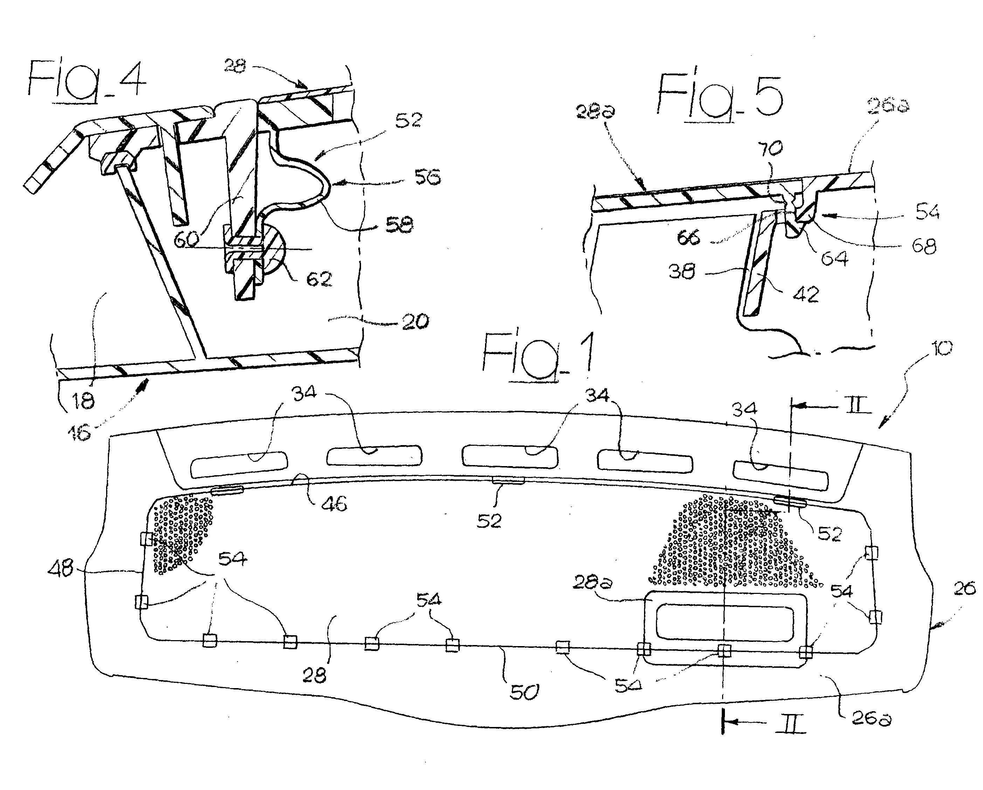

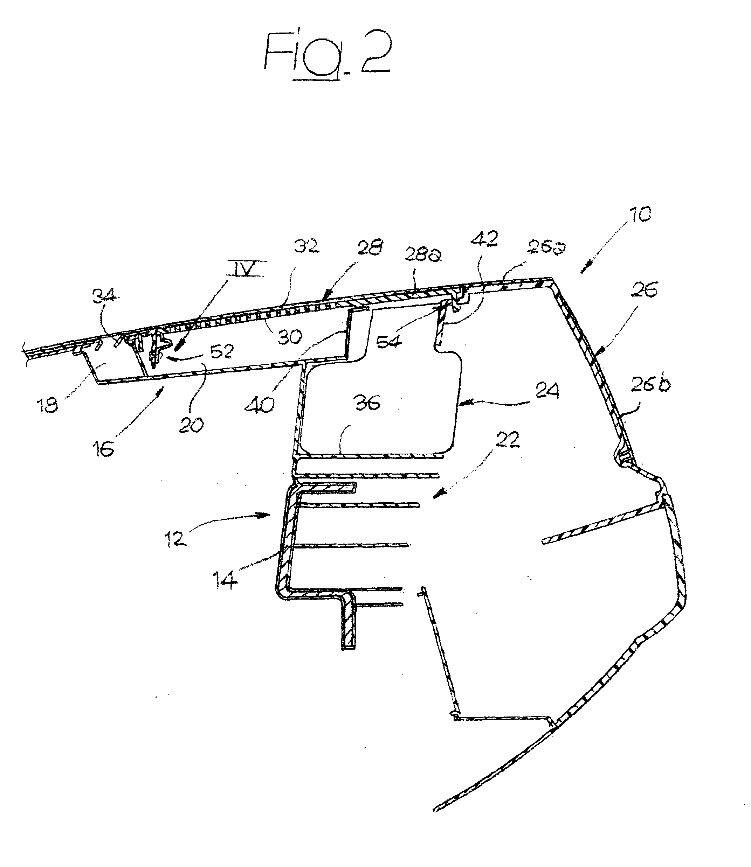

With reference to Figures 1 and 2, the reference number 10 designates a dashboard for vehicles according to the present invention. The dashboard 10 comprises a supporting structure 12 which can be made as described in a simultaneous patent application filed by the present applicant, entitled "Hybrid supporting structure for a vehicle dashboard, and process for manufacturing the same". As described in detail in the simultaneous patent application filed by the present applicant, the supporting structure 16 comprises a metal cross member 14, on which an air-distribution assembly is co-moulded, which includes a duct 18, which extends for a substantial part of the width of the dashboard 10. The duct 16 comprises a channel 18 for the demisting/defrosting air flow and a channel 20 for diffused-air distribution. Provided on the cross member 14 is, moreover, a support 22 which is co-moulded on the cross member and on which an air-bag 24 is installed.

The dashboard 10 comprises an external shell 26 fixed to the supporting structure 12. The external shell 26 has a top part 26a, which, in use, faces the windscreen of the vehicle, and a front part 26b, which, in use, faces the driver's seat and the passenger seat.

Once again with reference to Figures 1 and 2, the top part 26a of the external shell 26 comprises an air-permeable wall 28 that includes a support made of plastic material 30, which is perforated or has the form of a grill covered with a coating 32 made of air-permeable material. The channel 20 for diffused-air distribution is closed at the top by the permeable wall 28, which, as illustrated in Figure 1, extends over a substantial part of the width of the dashboard 10. The channel 18 for distribution of the demisting/defrosting air flow communicates with slits 34 arranged in such a way as to direct the demisting/defrosting air flow towards the windscreen (not illustrated).

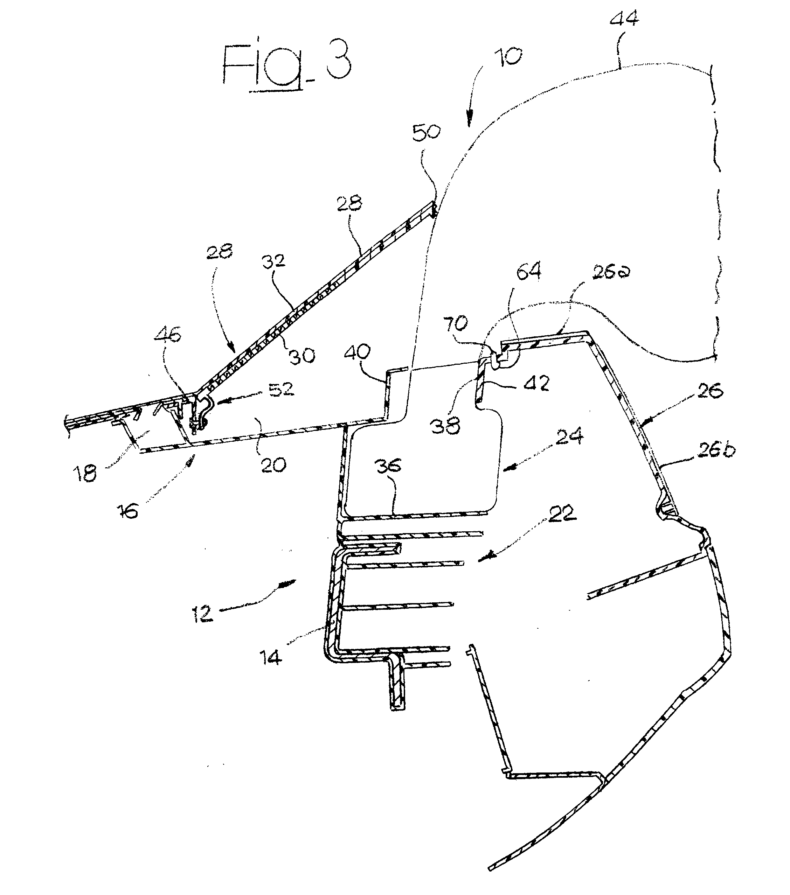

With reference to Figures 2 and 3, the air-bag assembly 24 is mounted on a substantially L-shaped seat 36 of the support 22, which is co-moulded on the cross member 14. The air-bag assembly 24 is associated to an outlet opening 38 defined between a side wall 40 of the distribution duct 16 and a wall 42 that forms part of the shell 26 and is substantially parallel to the wall 40. The outlet opening 38 opens out onto the top part 26a of the outer shell 26. The outlet opening 38 of the air-bag assembly 24 is closed at the top by a part 28a of the permeable wall 28. The part 28a of the wall 28 may not be permeable to air. The entire permeable wall 28 is connected to the outer shell 26 so as to be able to open in order to enable exit of the inflatable cushion of the air-bag 44, as represented schematically in Figure 3.

As illustrated in Figure 1, the wall 28 has a front side 46, two lateral sides 48, and a rear side 50. Along the front side 46 there is provided a set of hinge-like connecting elements 52 and, along the sides 48, 50 there is provided a plurality of calibrated-failure connecting elements 54. A possible embodiment of the connecting elements 52 and 54 is illustrated in the details of Figures 4 and 5. With reference to Figure 4, each hinge-like connecting element 52 has a flexible portion made of plastic material 56, which forms a bendable elbow 58 that is fixed, at one end, to a wall 60 of the outer shell 26, for example by means of a rivet 62. With reference to Figure 5, each calibrated-failure connecting element 54 comprises a snap-action engagement tooth or catch 64, which engages, by snap action, a corresponding hole 66 formed in a lowered portion 68 integral with the portion 26a of the outer shell 26. The snap-action engagement tooth 64 is formed integrally with the wall 28a and has a restricted failure section 70.

As illustrated in Figure 3, when the air-bag module 24 goes into action, the cushion 44 inflates instantaneously and comes out of the dashboard 10 through the opening 38. The force applied by the cushion 44 on the wall 28 produces breaking of the failure sections 70, and the permeable wall 28 rotates in the direction indicated by the arrow 72 about the hinge-like connecting elements 52.

The arrangement according to the present invention makes it possible to avoid using a separate component for forming the lid of the air-bag. The permeable wall 28 performs the dual function of top covering element of the duct for distribution of diffused air and lid of the air-bag module. The embodiment of the dashboard according to the present invention is therefore simpler and less expensive than dashboards of a traditional type, which entail the use of two separate components for providing the lid of the air-bag and the closing wall of the diffused-air distribution duct.

## Claims

1. A dashboard for vehicles comprising:
- a supporting structure (12) carrying a diffused-air distribution duct (16), which extends over a substantial part of the width of the dashboard (10);
- an outer shell (26), which surrounds the supporting structure (12), the outer shell (26) including an air-permeable wall (28), which closes the aforesaid diffused-air distribution duct (20) at the top and which extends over a substantial part pf the width of the dashboard (10); and
- an air-bag assembly (24) carried by the aforesaid supporting structure of the dashboard (12) and associated to an opening (38) for outlet of the cushion of the air-bag (44)
**characterized in that** the outlet opening (38) of the air-bag assembly (24) is defined between a side wall (40) of the distribution duct (16) and a wall (42) of the shell (26) and that the aforesaid permeable wall (28) has a portion (28a), which closes the aforesaid outlet opening (38) of the air-bag assembly (24).

2. The dashboard according to Claim 1, **characterized in that** the aforesaid permeable wall (28) is connected to the outer shell (26) by means of a plurality of hinge-like connecting elements (52) and by means of a plurality of calibrated-failure connecting elements (54).

3. The dashboard according to Claim 1, **characterized in that** the aforesaid permeable wall (28) comprises a rigid structure (30), which is perforated or is in the form of a grill covered with a coating (32) made of air-permeable material.

4. The dashboard according to Claim 1, **characterized in that** the aforesaid portion (28a) of the permeable wall (28), which covers the outlet opening (38) of the air-bag module (34), is not air-permeable.

## Patentansprüche

1. Armaturenbrett für Fahrzeuge, umfassend:
- eine Tragstruktur (12), die eine Streuluft-Verteilerleitung (16) trägt, welche sich über einen wesentlichen Teil der Breite des Armaturenbretts (10) erstreckt;
- eine Außenschale (26), welche die Tragstruktur (12) umgibt, wobei die Außenschale (26) eine luftdurchlässige Wand (28) einschließt, welche die Streuluft-Verteilerleitung (20) an der Oberseite abschließt und sich über einen wesentlichen Teil der Breite des Armaturenbretts (10) erstreckt; und
- eine Airbag-Baugruppe (24), die auf der Tragstruktur (12) des Armaturenbretts gelagert und mit einer Öffnung (38) zum Auslass des Kissens des Airbags (44) verbunden ist,
**dadurch gekennzeichnet, dass**
die Auslassöffnung (38) der Airbag-Baugruppe (24) zwischen einer Seitenwand (40) der Verteilerleitung (16) und einer Wand (42) der Schale (26) definiert ist und dass die durchlässige Wand (28) einen Abschnitt (28a) aufweist, der die Auslassöffnung (38) der Airbag-Baugruppe (24) verschließt.

2. Armaturenbrett gemäß Anspruch 1, **dadurch gekennzeichnet, dass** die durchlässige Wand (28) mittels einer Vielzahl von gelenkartigen Verbindungselementen (52) und einer Vielzahl von Sollbruch-Verbindungselementen (54) mit der Außenschale (26) verbunden ist.

3. Armaturenbrett gemäß Anspruch 1, **dadurch gekennzeichnet, dass** die durchlässige Wand (28) eine starre Struktur (30) umfasst, die durchbrochen oder wie ein Gitter geformt ist, das mit einer Auflage (32) aus luftdurchlässigem Material abgedeckt ist.

4. Armaturenbrett gemäß Anspruch 1, **dadurch gekennzeichnet, dass** der Abschnitt (28a) der durchlässigen Wand (28), der die Auslassöffnung (38) des Airbagmoduls (24) abdeckt, nicht luftdurchlässig ist.

## Revendications

1. Tableau de bord pour véhicules, comprenant :
une structure de support (12) supportant un conduit de distribution d'air diffusé (16), qui s'étend sur une partie sensible de la largeur du tableau de bord (10) ;
une coque externe (26), qui entoure la structure de support (12), la coque externe (26) comprenant une paroi perméable à l'air (28) qui enferme le conduit de distribution d'air diffusé (20) mentionné précédemment au niveau de la partie supérieure et qui s'étend sur une partie sensible de la largeur du tableau de bord (10) ; et
un ensemble de coussin d'air (24) supporté par la structure de support mentionnée précédemment du tableau de bord (12) et associé à une ouverture (38) pour la sortie du coussin du coussin d'air (44),
**caractérisé en ce que** l'ouverture de sortie (38) de l'ensemble de coussin d'air (24) est définie entre une paroi latérale (40) du conduit de distribution (16) et une paroi (42) de la coque (26) et **en ce que** la paroi perméable (28) mentionnée précédemment comprend une partie (28a) qui enferme l'ouverture de sortie (38) mentionnée précédemment de l'ensemble de coussin d'air (24).

2. Tableau de bord selon la revendication 1, **caractérisé en ce que** la paroi perméable (28) mentionnée précédemment est raccordée à la coque externe (26) au moyen d'une pluralité d'éléments de raccordement (52) en forme de charnière et au moyen d'une pluralité d'éléments de raccordement (54) à rupture calibrée.

3. Tableau de bord selon la revendication 1, **caractérisé en ce que** la paroi perméable (28) mentionnée précédemment comprend une structure rigide (30) qui est perforée ou se présente sous la forme d'une grille recouverte avec un revêtement (32) réalisé avec un matériau perméable à l'air.

4. Tableau de bord selon la revendication 1, **caractérisé en ce que** la partie (28a) mentionnée précédemment de la paroi perméable (28) qui recouvre l'ouverture de sortie (38) du module de coussin d'air (34) n'est pas perméable à l'air.
